# EUROPÄISCHE PATENTANMELDUNG

(11) **EP 4 786 299 A1**
(43) Veröffentlichungstag der Anmeldung: **05.08.2026**
(21) Anmeldenummer: 25219253.9
(22) Anmeldetag: 28.11.2025
(51) Int. Cl.: B61D 17/04, B61D 17/08, B62D 31/02

(54) **DIFFERENTIALE UND TEILDIFFERENTIALE GEHÄUSESTRUKTUREN MIT ANBINDUNGEN FÜR DIE INNENEINRICHTUNG**

(30) Priorität: 30.01.2025 DE 102025103486; 07.03.2025 DE 102025108710
(71) Anmelder: Siemens Mobility GmbH, 80997 München (DE)
(72) Erfinder: Kleba-Keydel, Hubert, 47829 Krefeld (DE); Kuhn, Daniel, 47829 Krefeld (DE)
(74) Vertreter: Siemens Patent Attorneys

(57) **Zusammenfassung**

Die Erfindung betrifft eine differentiale oder teildifferentiale Gehäusestruktur (1). Die differentiale oder teildifferentiale Gehäusestruktur (1) umfasst eine Außenhaut, eine Mehrzahl von horizontal verlaufenden Stringern (5) und/oder Hohlkammern (2) an der Außenhaut, eine Mehrzahl von vertikal und/oder quer zu den Stringern (5) und/oder Hohlkammern (2) verlaufenden Spanten (3), welche die Stringer (5) kreuzen und/oder auf die Hohlkammern (2) aufgebracht sind und mit diesen fest verbunden sind, und eine oder mehrere zusätzliche, durch die Spantenstruktur horizontal beschränkte Anbindungsstrukturen (8) an den Stringern (5) und/oder Hohlkammern (2) und/oder an den Spanten (3). Es wird auch ein Wagenkasten (51) beschrieben. Weiterhin wird auch ein Schienenfahrzeug (50) beschrieben. Außerdem wird ein Verfahren zur Montage einer differentialen oder teildifferentialen Gehäusestruktur (1) beschrieben.

## Beschreibung

Die Erfindung betrifft eine differentiale oder teildifferentiale Gehäusestruktur. Darüber hinaus betrifft die Erfindung einen Wagenkasten mit einer solchen differentialen oder teildifferentialen Gehäusestruktur. Zudem bezieht sich die Erfindung auf ein Schienenfahrzeug. Außerdem betrifft die Erfindung ein Verfahren zur Montage einer differentialen oder teildifferentialen Gehäusestruktur.

Transportmittel benötigen tragende Strukturen und Gehäuse, um Personen oder Gegenstände sicher an ihr Ziel zu transportieren. Bei Schienenfahrzeugen umfassen Wagons, Triebfahrzeuge oder Zugfahrzeuge üblicherweise einen sogenannten Wagenkasten, der heutzutage in selbsttragender Bauweise ausgeführt ist.

Unter selbsttragender Bauweise versteht man die Verwendung eines Wagenkastens, der keinen besonderen Rahmen bzw. Untergestell besitzt. Der Wagenkasten selbst nimmt sämtliche Zug- und Stoßkräfte auf. Er ist dabei in der Regel wie eine Vierkant-Röhre aufgebaut: seitlich werden Öffnungen in Form von Türen und Fensterbändern eingebracht, unten befinden sich Flansche zur Aufnahme des Fahrgestells, vorne und hinten Aufnahmen für Wagenpuffer und Wagenkupplung. Heute sind selbsttragende Wagenkästen die Regel, dabei werden unterschiedliche Bauweisen verwendet:
Bei der Integralbauweise werden Strangpressprofile eingesetzt, die sich über die gesamte Länge des Wagenkastens erstrecken und Breiten von etwa einem halben Meter aufweisen. Die einzelnen Profile werden mithilfe von Längsschweißungen verbunden. Zuvor werden mittels Fräsmaschine Aussparungen für Fenster, Türen, Durchbrüche, Lüftungsgitter etc. erstellt. Nach dem Zusammenschweißen werden diese Ausschnitte erneut mittels einer Fräsmaschine auf ihr jeweiliges Nennmaß aufgeweitet. Die Wagenkastenunterseite wird ebenfalls aus Strangpressprofilen hergestellt, sodass ein selbsttragender Wagenkasten entsteht. An der Unterseite werden Nuten erstellt, um den Wagenkasten auf die Drehgestelle aufsetzen und Bauteile wie Transformatoren oder Fahrmotoren im Unterboden anbringen zu können. Die Steifigkeit des Wagenkastens wird bei der Integralbauweise durch die Struktur der Strangpressprofile erreicht, sodass keine zusätzlichen tragenden Elemente notwendig sind und eine Leichtbauweise ermöglicht wird.

Der Fertigungsaufwand ist vergleichsweise gering. Die Fertigung ist weitgehend automatisierbar. Durch individuelle Gestaltung der Strangpressprofile ist ein komplexes Außendesign möglich. Allerdings können Strangpressprofile im Wesentlichen nur aus Aluminium gefertigt werden und sind daher mit hohen Material- und Werkzeugkosten verbunden. Die Fertigung großer Strangpressprofile mit komplexen Geometrien ist anspruchsvoll. Der Querschnitt des Strangpressprofils ist über die Länge durchgehend, wodurch keine Steifigkeitsänderungen möglich sind und daher auch kaum zusätzliches Leichtbaupotenzial möglich ist. Die Festigkeit von Aluminium-Schweißverbindungen ist bei aushärtbaren Aluminiumlegierungen gegenüber dem ungestörten Werkstoff in der Regel deutlich geringer. Die Unfallinstandsetzung ist mit einem hohen Aufwand verbunden. Wirtschaftlich wird die Integralbauweise vor allem bei großen Serien, wodurch sich der hohe Aufwand für die Entwicklung und Fertigung von Strangpressprofilen amortisiert.

Bei der Differential- oder Rohkastenbauweise wird zunächst ein tragendes Stahl- oder Aluminiumskelett aus horizontal verlaufenden Stringern und vertikal verlaufenden Spanten erstellt, auf das anschließend Bleche zur Beplankung aufgebracht werden. Die Differentialbauweise ist das einfachste und kostengünstigste Verfahren zur Erstellung eines Wagenkastens. Dies hat folgende Gründe: Es können auf Elementebene standardisierte Metall-Halbzeuge (z. B. Bleche) verwendet werden. Die Werkzeugkosten für die Fertigung sind gering, unter anderem weil einfache Fertigungstechnologien verwendet werden können. Instandsetzungen sind relativ einfach möglich. So können die nach einem Unfall verbeulten Außenbleche ausgetauscht werden. Die dazu notwendigen Schrauben sind entweder durch Leisten verdeckt oder außerhalb des eigentlichen Sichtbereichs angeordnet. Alternativ werden die Außenbleche mit den Versteifungen verschweißt. Nachteilig wirkt sich die hohe Anzahl von Einzelteilen auf den Fertigungsaufwand aus. Aufgrund des Wärmeeintrags beim Schweißen können Bauteile einen Verzug aufweisen und müssen daher im Anschluss nachgearbeitet werden (Richten, Spannungsarmglühen, Schleifen, Spachteln).

Heute wird die Differentialbauweise bei Vollbahnen nur mehr für Lokomotiven, Stahlwagenkästen, für Kleinserien und besondere Konstruktionen verwendet; bei Straßenbahnen hingegen ist sie noch immer weit verbreitet, um nach Unfällen eine einfachere und kostengünstige Reparatur gewährleisten zu können. Ferner erlaubt die Differentialbauweise dünnwandigere Wagenkästen als die Integralbauweise, was insbesondere bei Fahrzeugen mit schmaler Fahrzeugbegrenzungslinie - wie es Straßenbahnfahrzeuge in der Regel sind - von Bedeutung ist.

Werden Versteifungselemente unter anderem auf die Innenseite der Außenhaut gefügt, so kommen teilweise verzugsarme Schweißverfahren wie z.B. Reibrührschweißverfahren zum Einsatz, erzeugt werden, oder es kommen Klebverbindungen zum Einsatz, um stärkere Schweißverzüge zu verhindern und eine weitestgehend ebene Außenhaut zu gewährleisten.

Es gibt auch Varianten mit Versteifungselementen, die sich aufgrund ihrer Anordnung kreuzen. So sind beispielsweise zur Aussteifung Stringer an die Aluminiumstruktur angepresst. Quer dazu werden differentiale Versteifungsbauteile, zum Beispiel Spanten, angefügt. In den Kreuzungspunkten müssen entweder die Stringer unterbrochen werden oder die quer dazu angeordneten Spanten, was zu einer lokalen Schwächung der Struktur führt. Alternativ werden die Stringer und Spanten mit unterschiedlichen Höhen ausgeführt. Dadurch wird es ermöglicht, die jeweils höhere Versteifung im Kreuzungspunkt auszunehmen, wodurch die niedrigere Versteifung unterbrechungsfrei durchlaufen kann.

Bei Gehäusestrukturen von Schienenfahrzeugen in Integralbauweise werden Innenausbaukomponenten, Innverkleidungskomponenten und Anbaukomponenten üblicherweise mittels C-Schienen, welche direkt mit an die Hohlkammerprofile gepresst werden, an die Rohbaustruktur der Gehäusestruktur angebunden. Die C-Schienen verlaufen in der Regel nahezu über die gesamte Wagenkastenlänge und bieten in Verbindung mit Nutensteinen, welche in die C-Schienen eingeführt werden, eine sehr flexible Möglichkeit für die Anbindung von Komponenten.

Bei einer Teildifferentialbauweise werden die Hohlkammerprofile ganz oder zumindest teilweise durch einschalige Strukturen ersetzt. Auf diese Strukturen werden zudem Versteifungen gefügt, welche die benötigte Steifigkeit herstellen.

Aufgrund der einschaligen Strukturen und der Versteifungen ist das bei der Integralbauweise bewährte Konzept mit unterbrechungsfreien C-Schienen bei der Teildifferentialbauweise nicht in allen Bereichen analog umsetzbar.

Es besteht also die Aufgabe, auch bei differentialen Gehäusestrukturen oder teildifferentialen Gehäusestrukturen Komponenten, insbesondere Komponenten der Innenverkleidung und Inneneinrichtung, flexibel an die Rohbaustruktur anbinden zu können.

Diese Aufgabe wird durch eine differentiale oder teildifferentiale Gehäusestruktur gemäß Patentanspruch 1, einen Wagenkasten gemäß Patentanspruch 13, ein Schienenfahrzeug gemäß Patentanspruch 14 und ein Verfahren zur Montage einer differentialen oder teildifferentialen Gehäusestruktur gemäß Patentanspruch 15 gelöst.

Die differentiale oder teildifferentiale Gehäusestruktur weist eine Außenhaut auf und eine Mehrzahl von horizontal verlaufenden Stringern und/oder Hohlkammern an der Außenhaut. Die differentiale oder teildifferentiale Gehäusestruktur weist außerdem eine Mehrzahl von vertikal oder quer zu den Stringern und/oder Hohlkammern verlaufenden Spanten, welche die Stringer kreuzen und/oder auf die Hohlkammern aufgebracht sind und mit diesen fest verbunden sind, auf. Weiterhin umfasst die differentiale oder teildifferentiale Gehäusestruktur eine oder mehrere zusätzliche, durch die Spantenstruktur bzw. die Anordnung der Spanten horizontal beschränkte Anbindungsstrukturen an den Stringern und/oder Hohlkammern und/oder an den Spanten.

Als differentiale oder teildifferentiale Gehäusestruktur soll eine Gehäusestruktur verstanden werden, bei der zumindest ein Teil der Integralstruktur durch eine differentiale Gehäusestruktur ersetzt ist. D.h., die Wand des Gehäuses ist teilweise bzw. in Teilbereichen der Wand einschalig ausgelegt und nicht zweischalig, wie es bei einer Integralbauweise der Fall wäre. Vorzugsweise umfasst die Gehäusestruktur eine Mehrzahl von vertikal und/oder quer oder in einem beliebigen Winkel außer null Grad zur Längsachse der Stringer oder Hohlkammern der Gehäusestruktur verlaufenden Spanten, welche auf die Hohlkammern aufgebracht sind und mit diesen fest verbunden sind. "Horizontal" und "vertikal" oder "quer" ist so aufzufassen, dass die damit bezeichneten Komponenten bestimmungsgemäß angeordnet und ausgerichtet sind. "Quer" soll in der gesamten Anmeldung auch die Variante abdecken, dass eine Anordnung in einem beliebigen Winkel außer null Grad von zwei Komponenten zueinander erfolgt. Es wird aber auch an vielen Stellen nochmals explizit darauf hingewiesen, dass neben der üblicherweise als "quer" bezeichneten orthogonalen Anordnung auch andere beliebige Winkel außer null Grad für die Anordnung der Spanten gegenüber den Stringern und Hohlkammern für die erfindungsgemäße Gehäusestruktur in Frage kommt bzw. von dieser abgedeckt ist.

Als "Außenhaut" soll ein einwandiges Gehäuseblech, also die Gehäusewand, verstanden werden, dessen eine Seite der äußeren Umgebung der Gehäusestruktur zugewandt angeordnet ist. Die Funktion von Stringern besteht darin, dass die Stabilität der Außenhaut in horizontaler Richtung unterstützt wird.

Als Anbindungsstruktur soll eine Haltestruktur verstanden werden, mit der im Gehäuse der Gehäusestruktur vorhandene Komponenten, vorzugsweise Komponenten des Innenraums, der von dem Gehäuse der Gehäusestruktur umgeben wird, an der Gehäusestruktur fixiert werden. Derartige Komponenten umfassen vorzugsweise Innenverkleidungskomponenten oder im Innenbereich des Gehäuses der Gehäusestruktur vorhandene Anbaukomponenten, insbesondere an dem Gehäuse fixierte Inneneinrichtungsgegenstände, bevorzugt Regale, insbesondere Gepäckregale, ebenfalls bevorzugt Tische, Sitze, Haltestangen, Trennwände.

Vorteilhaft werden die für die Stabilität und Steifigkeit der Gehäusestruktur nötigen Komponenten, insbesondere die Spanten, Stringer und Hohlkammern, zusätzlich für die Anbindung von Komponenten im Innenraum der Gehäusestruktur genutzt, so dass aufgrund dieser Doppelfunktion Material und Gewicht eingespart werden kann. Vorteilhaft lassen sich mit den horizontal beschränkten Anbindungsstrukturen auch Spanten der differentialen oder teildifferentialen Gehäusestruktur überbrücken, so dass die Positionierung und Ausdehnung von Komponenten des Innenraums freier gewählt werden können.

Der erfindungsgemäße Wagenkasten weist die erfindungsgemäße differentiale oder teildifferentiale Gehäusestruktur auf. Als Wagenkasten wird der Aufbau eines Schienenfahrzeugs, d.h. insbesondere eines Eisenbahnwagens oder Triebwagens oder einer Lokomotive, bezeichnet. Der erfindungsgemäße Wagenkasten teilt die Vorteile der erfindungsgemäßen differentialen oder teildifferentialen Gehäusestruktur.

Das erfindungsgemäße Schienenfahrzeug weist die erfindungsgemäße differentiale oder teildifferentiale Gehäusestruktur auf. Das erfindungsgemäße Schienenfahrzeug teilt die Vorteile der erfindungsgemäßen differentialen oder teildifferentialen Gehäusestruktur.

Bei dem erfindungsgemäßen Verfahren zur Montage einer differentialen oder teildifferentialen Gehäusestruktur wird eine Gehäusestruktur mit einer Außenhaut und mit einer Mehrzahl von horizontal an der Außenhaut entlang verlaufenden Stringern und/oder Hohlkammern ausgebildet. Die Stringer und/oder Hohlkammern werden so angeordnet, dass sie in direktem mechanischen Kontakt mit der Außenhaut stehen und diese stabilisieren bzw. versteifen.

Weiterhin wird eine Mehrzahl von vertikal und/oder quer oder in einem beliebigen Winkel außer null Grad zu den Stringern und/oder Hohlkammern verlaufenden Spanten, welche die Stringer kreuzen und/oder auf die Hohlkammern aufgebracht sind und mit diesen fest verbunden werden, ausgebildet. Die Spanten erhöhen die Stabilität und Steifigkeit der Außenhaut und der Gesamtstruktur.

Zudem wird eine oder werden mehrere zusätzliche, durch die Spantenstruktur horizontal beschränkte Anbindungsstruktur bzw. Anbindungsstrukturen an den Stringern und/oder Hohlkammern und/oder an den Spanten ausgebildet. Wie bereits erwähnt, dienen die Anbindungsstrukturen der Fixierung von im Inneren der Gehäusestruktur angeordneten Komponenten, insbesondere Teilen der Wandverkleidung oder Inneneinrichtung. Das erfindungsgemäße Verfahren zur Montage einer differentialen oder teildifferentialen Gehäusestruktur teilt die Vorteile der erfindungsgemäßen differentialen oder teildifferentialen Gehäusestruktur.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

Bei einer besonders vorteilhaften Ausgestaltung einer teildifferentialen Gehäusestruktur ersetzen Hohlkammern die Stringer zumindest teilweise. Die Spanten können nun vorteilhaft direkt auf den Hohlkammern aufgebracht werden und müssen keinen direkten Kontakt mit der Außenhaut aufweisen, so dass eine Beschädigung der Außenhaut oder eine ästhetisch unerwünschte Veränderung der Oberfläche der Außenhaut vermieden werden kann. Die Anordnung der Hohlkammern erspart außerdem eine Durchkreuzung von Versteifungen, d.h. insbesondere der sonst eingesetzten Spanten und Stringer, so dass keine Unterbrechungen oder Ausnehmungen notwendig sind, um eine Stabilisierung der Außenhaut in vertikaler und horizontaler Richtung zu erzielen. Auf diese Weise wird eine lokale Schwächung der Versteifungen infolge der sonst üblichen Unterbrechungen oder Ausnehmungen vermieden. Weiterhin wird auch der Aufwand für die Herstellung dieser herkömmlich genutzten Unterbrechungen oder Ausnehmungen eingespart.

In einer Variante der erfindungsgemäßen teildifferentialen Gehäusestruktur weisen die Hohlkammern einen rechteckigen Querschnitt auf. Ein rechteckiger Querschnitt erlaubt eine großflächige Verbindung der Hohlkammer mit einem Spant, da die Außenflächen der Hohlkammer für den Fall eines rechteckigen Querschnitts eben sind.

Bevorzugt weist die erfindungsgemäße teildifferentiale Gehäusestruktur eine teilweise integrale Struktur auf, wobei die Enden der Spanten mit der teilweisen integralen Struktur verbunden sind. Die teilintegrale bzw. teilsweise integrale Struktur wird bei dieser Variante vorteilhaft als "Anker" für die Fixierung der Spanten genutzt. Vorzugsweise werden dabei die Enden der Spanten mit einer teilweise integralen Struktur zusammengefügt, so dass neben einer stoffschlüssigen Verbindung zumindest in einer Richtung, vorzugsweise in vertikaler Richtung, eine formschlüssige Verbindung entsteht, so dass die Stabilität der Verbindung zwischen den Spanten und der übrigen Gehäusestruktur verbessert wird. Vorzugsweise verlaufen unterhalb der Spanten jedoch weiterhin Hohlkammern, die ebenfalls mit den Spanten verbunden werden. Somit wird neben einem Stoffschluss auch ein Formschluss in horizontaler Richtung, d.h. nach außen hin erzeugt. Die Kombination von Formschlüssen in unterschiedlichen Richtungen verbessert die Stabilität der teildifferentialen Gehäusestruktur weiter.

Ebenfalls bevorzugt erfolgt die Verbindung der Spanten mit der teilweise integralen Struktur auf der Innenseite der teilweise integralen Struktur, so dass die Spanten keinen direkten Kontakt mit der Außenhaut der Gehäusestruktur aufweisen. Vorteilhaft kann verhindert werden, dass Schweißverzüge von Schweißnähten, die für die Fixierung von Spanten an der übrigen Gehäusestruktur benötigt werden, auf der Außenhaut der Gehäusestruktur sichtbar werden.

In einer Ausgestaltung der erfindungsgemäßen differentialen oder teildifferentialen Gehäusestruktur umfassen die zusätzlichen Anbindungsstrukturen eine der folgenden Komponenten:
- Aussparungen an den Hohlkammern,
- Vorsprünge an den Hohlkammern,
- Aussparungen an den Spanten für das Einsetzen von Nutensteinen.

Vorteilhaft werden die bereits vorhandenen Strukturen zur Erhöhung der Steifigkeit der Gehäusestruktur zusätzlich für die Anbindung von zusätzlichen Komponenten, insbesondere Komponenten der Inneneinrichtung oder der Innenverkleidung genutzt. Hohlkammern sind vorhanden, wenn eine teildifferentiale Gehäusestruktur vorliegt. Spanten sind sowohl bei differentialen als auch bei teildifferentialen Gehäusestrukturen vorhanden.

In einer bevorzugten Ausgestaltung der erfindungsgemäßen differentialen oder teildifferentialen Gehäusestruktur weisen die Anbindungsstrukturen ein Langloch auf, das in einen Stringer und/oder eine Hohlkammer auf seiner dem Innenraum zugewandten Seite derart ausgebildet ist, dass durch das Langloch ein Nutenstein hindurchführbar ist. Mit dem Nutenstein lässt sich eine Anbindungskomponente, insbesondere eine Schiene oder Winkel, an den Verstärkungsstrukturen der differentialen oder teildifferentialen Gehäusestruktur fixieren.

In einer alternativen Variante der erfindungsgemäßen differentialen oder teildifferentialen Gehäusestruktur weisen die Anbindungsstrukturen eine L-förmige Aussteifung an einem Stringer und/oder an einer Hohlkammer auf, welche zum Abstützen eines Moments einer Halterung einer anzubindenden Komponente, ausgebildet ist. An dieser winkelartigen Aussteifung lassen sich Anbindungskomponenten von Gegenständen einer Inneneinrichtung leicht befestigen, insbesondere auch in Bereichen, in denen keine vertikal verlaufende Spanten vorhanden sind, aber horizontal verlaufende Strukturen.

Die differentiale oder teildifferentiale Gehäusestruktur kann auch so ausgestaltet sein, dass die Anbindungsstrukturen horizontal verlaufende C-Schienen umfassen, die im Bereich der Spanten unterbrochen sind. Auf diese Weise werden die Bereiche für C-Schienen genutzt, in denen keine Spanten auftreten. Die C-Schienen können dabei über ihre gesamte Länge an horizontal verlaufenden Versteifungsstrukturen befestigt werden, ohne dass die nach innen hervorstehenden Spanten im Weg sind.

Die differentiale oder teildifferentiale Gehäusestruktur kann weiterhin so ausgestaltet sein, dass die Anbindungsstrukturen an die Hohlkammer und/oder Stringer und/oder Spanten zusätzlich fixierte Anbindungskomponenten umfassen. Diese Anbindungskomponenten gleichen vorteilhaft die nach innen in den Innenraum reichende Versteifungsstruktur aus, so dass die Inneneinrichtung genauso an diese Anbindungskomponenten angekoppelt werden kann, wie es bei Integral-Gehäusestrukturen möglich ist.

Vorzugsweise werden bzw. sind die zusätzlich fixierten Anbindungskomponenten durch Nieten an den Hohlkammern und/oder Stringern und/oder Spanten fixiert. Vorteilhaft beeinträchtigen diese Fixierungen nicht die Oberfläche der Außenhaut, da die dem Innenraum zugewandten Seiten der genannten Versteifungskomponenten ausreichend weit entfernt von der Außenhaut angeordnet sind.

In einer vorteilhaften Ausgestaltung der erfindungsgemäßen differentialen oder teildifferentialen Gehäusestruktur umfassen die Anbindungsstrukturen Aussparungen, die direkt in zwei benachbarten Spanten ausgebildet sind, derart, dass eine Halterung zwischen zwei Spanten angeordnet werden kann. Vorteilhaft können Bereiche, insbesondere Fensterbereiche, in denen keine zusätzlichen Spanten positionierbar sind, überbrückt werden.

Die in Spanten ausgebildeten Aussparungen umfassen bevorzugt eine Schlüssellochfräsung. Eine solche Schlüssellochfräsung oder Schlüssellochbohrung kann als Anbindungsstruktur oder Teil einer solchen Anbindungsstruktur zur Fixierung einer Halterung verwendet werden, wobei eine Anbindungskomponente der Halterung in die Schlüssellochfräsung oder Schlüssellochbohrung eingreift.

Alternativ sind die Aussparungen dazu ausgebildet, eine Gewindeplatte aufzunehmen, in welche durch die jeweilige Aussparung eine Schraube drehbar ist. Vorteilhaft lässt sich eine Anbindungskomponente einer Halterung mittels der Gewindeplatte und der Schraube in der Aussparung fixieren.

In einer Variante der erfindungsgemäßen differentialen oder teildifferentialen Gehäusestruktur umfassen die Anbindungsstrukturen eine C-Schiene, welche auf mindestens zwei einander benachbarten Spanten fixiert ist. Vorteilhaft können die Spanten als Verankerungskomponenten für C-Schienen genutzt werden. Als C-Schiene soll eine schienenförmige Montagehilfe mit einem C-förmigen Profil verstanden werden. An die C-Schiene(n) können dann herkömmliche, auch bei Integral-Gehäusestrukturen genutzte Anbindungskomponenten angekoppelt werden, so dass keine spezifisch für die differentiale oder teildifferentiale Gehäusestruktur ausgebildete Anbindungskomponenten produziert werden müssen. Dadurch werden Ressourcen gespart und Produktionsprozesse und Montageprozesse vereinfacht.

In einer Ausgestaltung der erfindungsgemäßen differentialen oder teildifferentialen Gehäusestruktur sind die Anbindungsstrukturen dazu ausgebildet, Innenverkleidungskomponenten mit den Stringern oder Hohlkammern zu fixieren, derart, dass die Innenverkleidungskomponenten eine Stabilisierungsfunktion für die Gehäusestruktur übernehmen. Vorteilhaft kann die differentiale oder teildifferentiale Gehäusestruktur zur Anordnung und Fixierung von Einrichtungskomponenten genutzt werden.

Die Erfindung wird im Folgenden unter Hinweis auf die beigefügten Figuren anhand von Ausführungsbeispielen noch einmal näher erläutert. Es zeigen:
- FIG 1: eine schematische Darstellung einer teildifferentialen Gehäusestruktur mit Langlöchern in Stringern gemäß einem Ausführungsbeispiel der Erfindung in zwei Teildarstellungen,
- FIG 2: eine schematische Darstellung einer Stringerstruktur mit einer T-förmigen Anbindung eines Gepäckregals,
- FIG 3: eine schematische Darstellung einer Stringerstruktur mit einer L-förmigen Anbindung eines Gepäckregals,
- FIG 4: eine schematische Darstellung einer Stringerstruktur mit einer Sonderform,
- FIG 5: eine schematische Darstellung einer Stringerstruktur mit einer Ausnehmung,
- FIG 6: eine schematische Darstellung einer Hohlkammer mit Auslauf als Anbindung für ein Gepäckregal in zwei Teildarstellungen in zwei Ansichtsrichtungen,
- FIG 7: eine schematische Darstellung einer Hohlkammer mit Langloch,
- FIG 8: eine schematische Darstellung einer teildifferentialen Gehäusestruktur mit einem Spant mit Schlüssellochausfräsung,
- FIG 9: eine schematische Darstellung (in zwei Teildarstellungen, einmal als Übersicht, einmal als vergrößerter Ausschnitt) einer Anbindung eines Gepäckregals an zwei zwischen Fenstern angeordneten Spanten,
- FIG 10: eine schematische Darstellung einer Anbindung eines Gepäckregals an zwei benachbarten Spanten,
- FIG 11: eine schematische Darstellung von auf eine Spante aufgeschweißten C-Schienen,
- FIG 12: eine schematische Darstellung von Innenverkleidungsteilen, welche an vorhandenen Stringern befestigt sind,
- FIG 13: eine schematische Darstellung einer Anbindung eines Tisches an einem String über eine Spante hinweg,
- FIG 14: eine schematische Darstellung eines Schienenfahrzeugs gemäß einem Ausführungsbeispiel der Erfindung,
- FIG 15: ein Flussdiagramm, welches ein Verfahren zur Montage einer teildifferenzialen Gehäusestruktur gemäß einem Ausführungsbeispiel der Erfindung veranschaulicht.

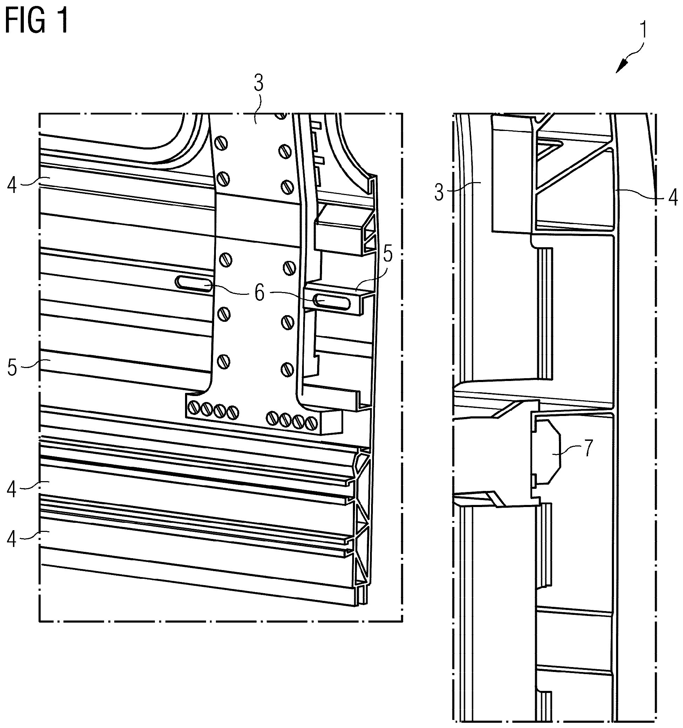

In FIG 1 eine Darstellung einer teildifferentialen Gehäusestruktur 1 mit Langlöchern 6 in Stringern 5 gemäß einem Ausführungsbeispiel der Erfindung mit zwei Teildarstellungen gezeigt.

In einer linken perspektivischen Teildarstellung ist in FIG 1 eine schematische Darstellung einer teildifferentialen Gehäusestruktur 1 mit Langlöchern 6 in Stringern 5 gemäß einem Ausführungsbeispiel der Erfindung gezeigt. Die teildifferentiale Gehäusestruktur 1 wird außerdem durch vertikal verlaufende Spanten 3 verstärkt.

Die Stringer 5 sind mittig in Längsrichtung orientiert zur Verstärkung der teildifferentialen Gehäusestruktur 1 angeordnet. In einem unteren und oberen Bereich der teildifferentialen Gehäusestruktur 1 sind Integralstrukturen bzw. Integralbauteile 4 ausgebildet, so dass eine teildifferentiale Gehäusestruktur 1 entsteht.

Die Stringer 5 sind derart mit Langlöchern 6 ausgebildet, dass sie sich zugleich für die Anbindung von Innenausbaukomponenten oder Verkleidungsteilen nutzen lassen. Auf diese Weise müssen keine zusätzlichen C-Schienen o.ä. angepresst werden, was einen negativen Einfluss auf die Bauteilmasse hätte.

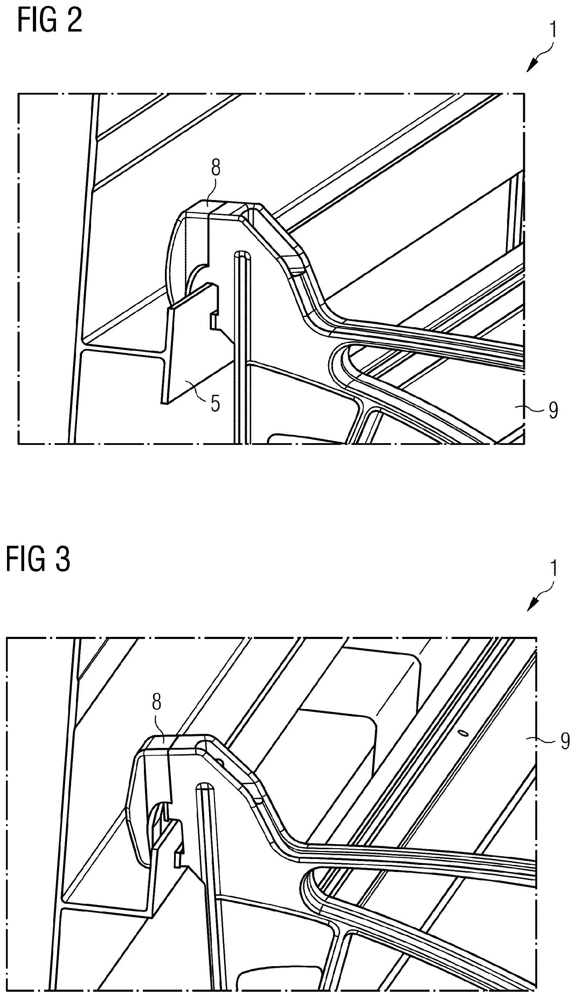

In FIG 1 sind in L-förmig ausgebildete Stringer 5 Langlöcher 6 eingebracht, durch welche Nutensteine 7 eingeführt sind, wie es in einer rechten als Querschnitt gezeigten Teildarstellung von FIG 1 veranschaulicht ist. Mit Hilfe der Nutensteine 7 lassen sich Anbindungskomponenten 8 (siehe FIG 2), beispielsweise für Regale, fixieren.

Die Anbindungskomponenten 8 können, wie in FIG 2 gezeigt, eine klauenartige Ausformung aufweisen. Wie in FIG 2 weiterhin gezeigt ist, können diese Anbindungskomponenten 8 (siehe FIG 2) eine Art Puffer oder Schutz, beispielsweise aus Gummi, umfassen, um die Kontaktfläche zu schützen und gegebenenfalls Geräusche zu vermeiden.

In FIG 2 ist eine schematische Darstellung einer teildifferentialen Gehäusestruktur 1 mit einem Stringer 5 mit einem T-förmigen Querschnitt gezeigt. Der Querbalken des T-Querschnitts dient zur Anbindung eines Gepäckregals 9, genauer gesagt einer klauenartigen Anbindungskomponente 8 des Gepäckregals 9.

Bei dieser Variante sind die Anbindungskomponenten 8 direkt in entsprechend ausgeführte Versteifungen der Stringer 5 eingehängt. Die darauf aufbauende Idee besteht darin, dass die bei der Teildifferentialbauweise ohnehin vorgesehenen und notwendigen Versteifungen in Form von Stringern 5 in den Bereichen, wo Anbindungen erforderlich sind, so ausgeformt oder angeordnet werden, dass zugleich auch die bewährten Anbindungskonzepte umgesetzt werden können. Damit werden in Bezug auf die Stringer 5 eine Versteifungsfunktion und eine Schnittstellenfunktion miteinander kombiniert. Die Versteifungen und damit auch die Anbindungsmöglichkeiten bzw. Anbindungskomponenten 8 werden in den einschaligen Bereichen angeordnet, da hier die Steifigkeit gegenüber einer Integralbauweise reduziert ist und damit ohnehin Stringer 5 erforderlich sind, so dass die Verwendung von zusätzlichem Material vermieden werden kann.

In FIG 3 ist eine schematische Darstellung einer teildifferentialen Gehäusestruktur 1 mit einem Stringer 5 mit einem L-förmigen Querschnitt und einer klauenartigen Anbindungskomponente 8 eines Gepäckregals 9 veranschaulicht. Anders als bei der in FIG 2 gezeigten Anordnung ist der Querschnitt des zur Anbindung genutzten Stringers 5 nicht T-förmig, sondern L-förmig.

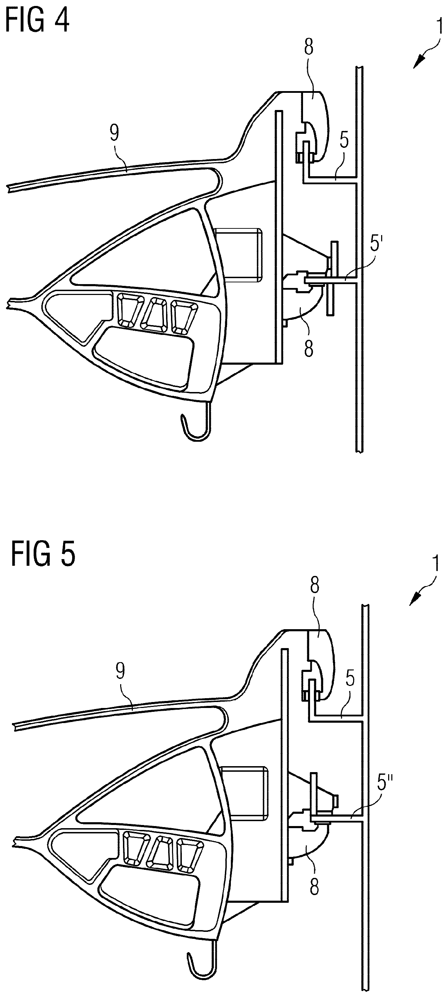

In FIG 4 ist eine schematische Darstellung eines Querschnitts einer teildifferentialen Gehäusestruktur 1 mit einer Struktur eines Querschnitts eines Stringers 5' mit einer Sonderform gezeigt. Die Struktur des Querschnitts ist kreuzförmig ausgebildet. Die Anbindungskomponente 8 des Regals 9 kann gegen die Sonderstruktur des Stringers 5' derart abgestützt werden, dass ein Drehmoment des Regals 9 aufgefangen wird.

In FIG 5 ist eine schematische Darstellung einer teildifferentialen Gehäusestruktur 1 mit Stringern 5 und einem Regal 9 mit Anbindungskomponenten 8 gezeigt. Es ist ein L-förmiger Stringer 5 im oberen Teil der Darstellung gezeigt, auf die eine Anbindungskomponente 8 von oben vertikal zugreift.

Im unteren Teil der Darstellung ist ein weiterer Stringer 5"mit einer Ausnehmung in Längsrichtung veranschaulicht. Die Ausnehmung, welche im Querschnitt nicht direkt zu erkennen ist, ist gestrichelt dargestellt. Die Ausnehmung dient dazu, die Geometrie des Stringers 5" an die Form einer horizontal auf den Stringer 5" zugreifenden Anbindungskomponente 8 anzupassen.

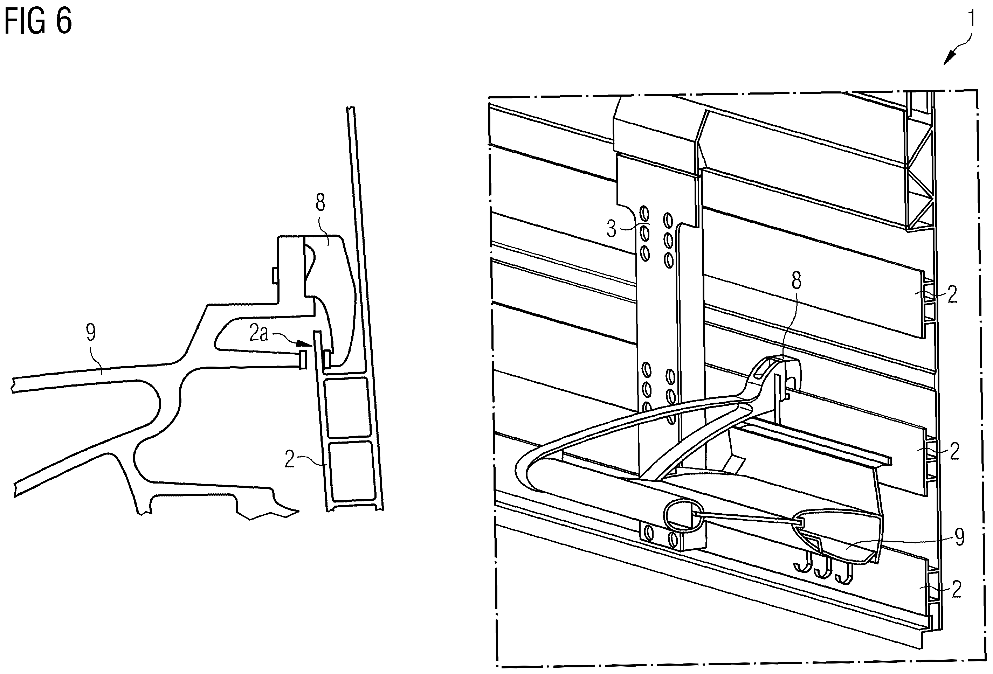

In FIG 6 ist eine schematische Darstellung einer teildifferentialen Gehäusestruktur 1 mit einer Hohlkammer 2 mit einem Vorsprung 2a oder Auslauf als Angriffspunkt für eine Anbindungskomponente 8 eines Gepäckregals 9 in Form von zwei Teildarstellungen gezeigt. In einer linken Teildarstellung wird ein Querschnitt der teildifferentialen Gehäusestruktur 1 gezeigt und in einer rechten Teildarstellung wird eine perspektivische Darstellung dieser teildifferentialen Gehäusestruktur 1 veranschaulicht. Dabei ist auch ein quer zu der Hohlkammer 2 bzw. den Hohlkammern 2 verlaufender Spant 3 eingezeichnet.

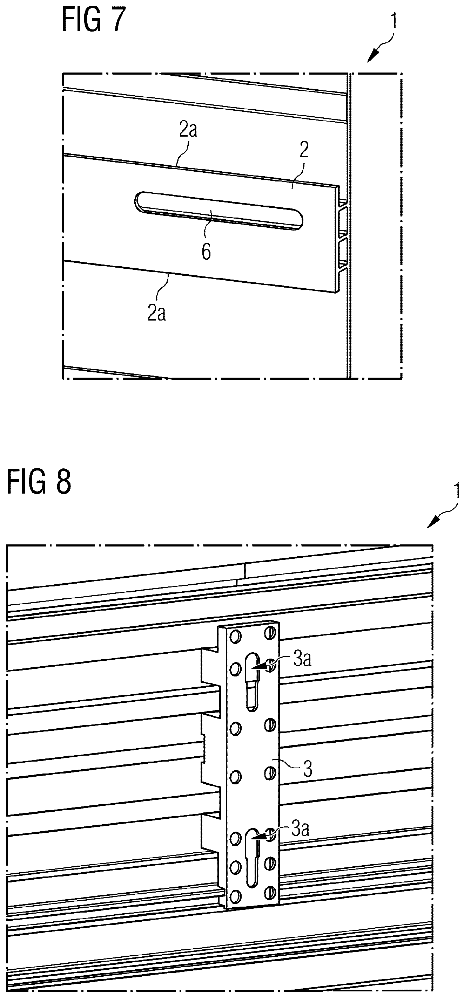

In FIG 7 ist eine schematische Darstellung einer teildifferentialen Gehäusestruktur 1 mit einer Hohlkammer 2 mit Langloch 6 veranschaulicht. Die Hohlkammer 2 ist mit verlängerten Vorsprüngen 2a, auch Ausläufen genannt, ausgebildet. In das Langloch 6 kann eine Anbindungskomponente (nicht gezeigt) eingreifen, um eine Komponente der Innenverkleidung oder Inneneinrichtung eines Schienenfahrzeugs daran zu fixieren. Beispielsweise kann ein Nutenstein (nicht gezeigt) in dem Langloch 6 angeordnet werden. Der Nutenstein (nicht gezeigt) kann dann mit einer Anbindungskomponente einer Komponente der Innenverkleidung oder Inneneinrichtung verbunden werden.

In FIG 8 ist eine schematische Darstellung einer teildifferentialen Gehäusestruktur 1 mit einem Spant 3 mit zwei Schlüssellochausfräsungen 3a gezeigt. Aufgrund der unterschiedlichen Dicke des Spants 3 umfasst die obere Schlüssellochausfräsung 3a einen vollständigen Durchbruch 3a und umfasst die untere Ausfräsung keinen vollständigen Durchbruch 3a. An dem Spant 3 lassen sich Anbindungskomponenten bzw. Halterungen von Gepäckablagen einhängen.

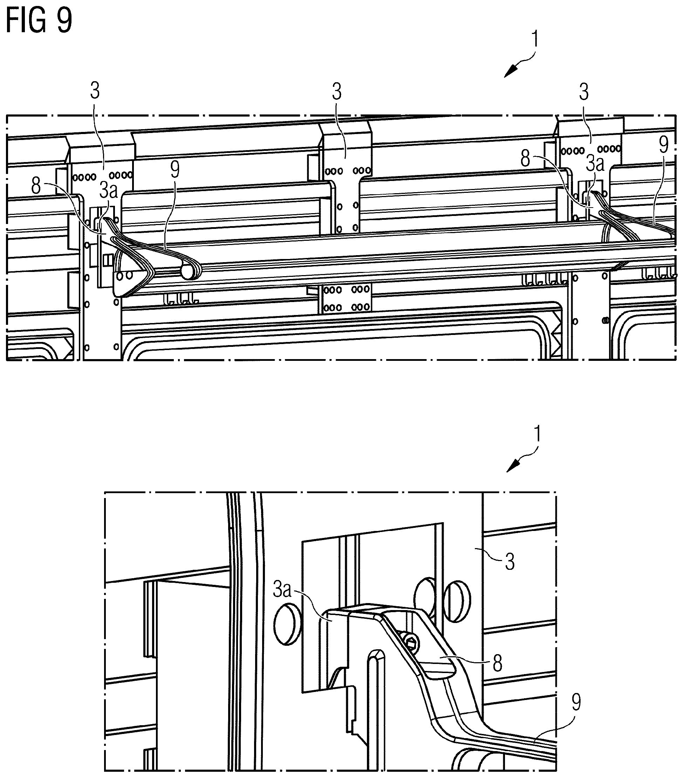

In FIG 9 ist eine schematische Darstellung (in zwei Teildarstellungen, einmal als Übersicht, einmal als vergrößerter Ausschnitt) einer Anbindung eines Gepäckregals 9 an zwei zwischen Fenstern angeordneten Spanten 3 veranschaulicht.

In einer oberen Teildarstellung ist eine schematische Darstellung einer perspektivischen Übersicht einer teildifferentialen Gehäusestruktur 1 mit einer Anbindung eines Gepäckregals 9 an zwei zwischen Fenstern angeordneten Spanten 3 gezeigt.

Wie in einer unteren Teildarstellung (d.h. eines vergrößerten Ausschnitts der Darstellung aus der oberen Teildarstellung) der teildifferentialen Gehäusestruktur 1 vergrößert gezeigt ist, weisen die Spanten 3 gefräste Durchbrüche 3a bzw. Öffnungen auf, in die die Anbindungskomponenten 8 des Gepäckregals 9 eingehängt werden.

Wie in der oberen Teildarstellung zu erkennen ist, überspannt das Gepäckregal 9 ein komplettes Fensterfeld. Somit ist eine Anbindung zwischen zwei Spanten 3 auf der Außenwand nicht erforderlich.

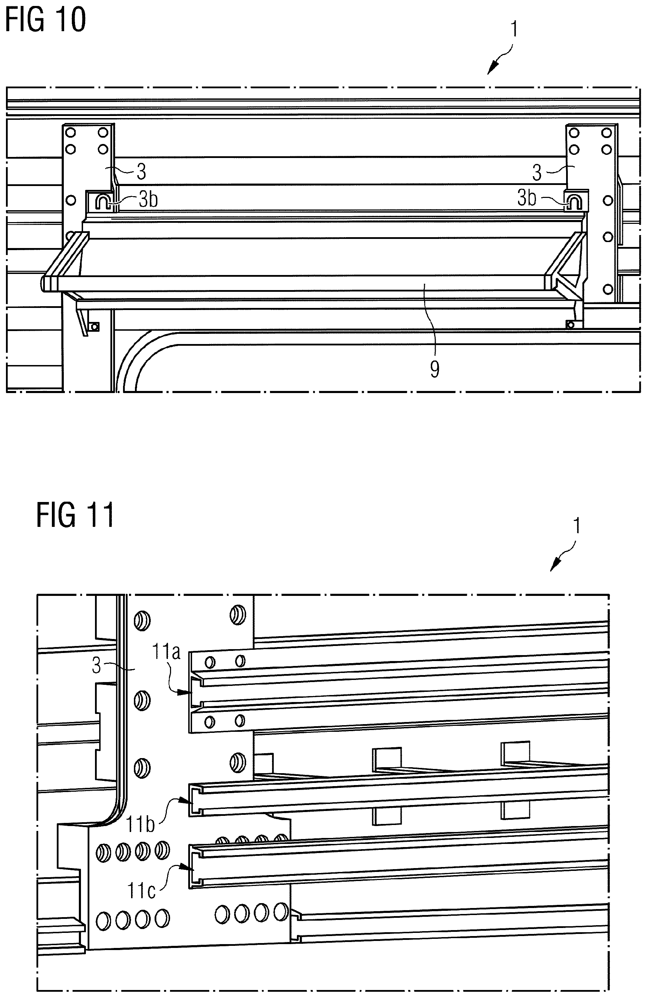

In FIG 10 ist eine schematische Darstellung einer Anbindung eines Gepäckregals 9 an zwei benachbarten Spanten 3 gezeigt. Dabei sind die Anbindungskomponenten 8 des Gepäckregals 9 direkt in vorhandene Bohrungen 3b der Spanten 3 eingehängt. In dem in FIG 10 veranschaulichten Fall wird seitlich in den jeweiligen Spant 3 eine Öffnung eingebracht, die es ermöglicht, eine Gewindeplatte in die Hohlkammer des Spants 3 einzuführen, in welche durch die im jeweiligen Spant 3 befindliche Bohrung 3b eine Schraube gedreht werden kann.

In FIG 11 ist eine schematische Darstellung einer teildifferentialen Gehäusestruktur 1 mit auf einen Spant 3 aufgeschweißten C-Schienen 11a, 11b, 11c gezeigt. Um in Fahrzeuglängsrichtung eine maximale Flexibilität für Anbauteile auch im Bereich von Spanten zu gewährleisten, können auf die teildifferentiale Struktur 1 C-Schienen aufgebracht werden, die über den Spant 3 verlaufen und somit an keiner Stelle unterbrochen werden müssen. Die Anbindung kann über Schrauben, FSW-Punktverbindungen ("FSW" steht für "friction stir welding", im Deutschen etwa "Rührreibschweißen"), Schweißnähte oder andere Verbindungstechnologien erfolgen. In FIG 11 sind beispielhaft eine erste C-Schiene 11a (im Bild oben), eine zweite C-Schiene 11b (im Bild in der Mitte) und eine dritte C-Schiene 11c (im Bild unten) dargestellt. Die erste C-Schiene 11a ist auf den Spant 3 aufgeschraubt. Die zweite C-Schiene 11b ist auf den Spant 3 und die Außenhaut der Gehäusestruktur 1 aufgeschweißt. Die dritte C-Schiene 11c ist auf den Spant 3 aufgeschweißt.

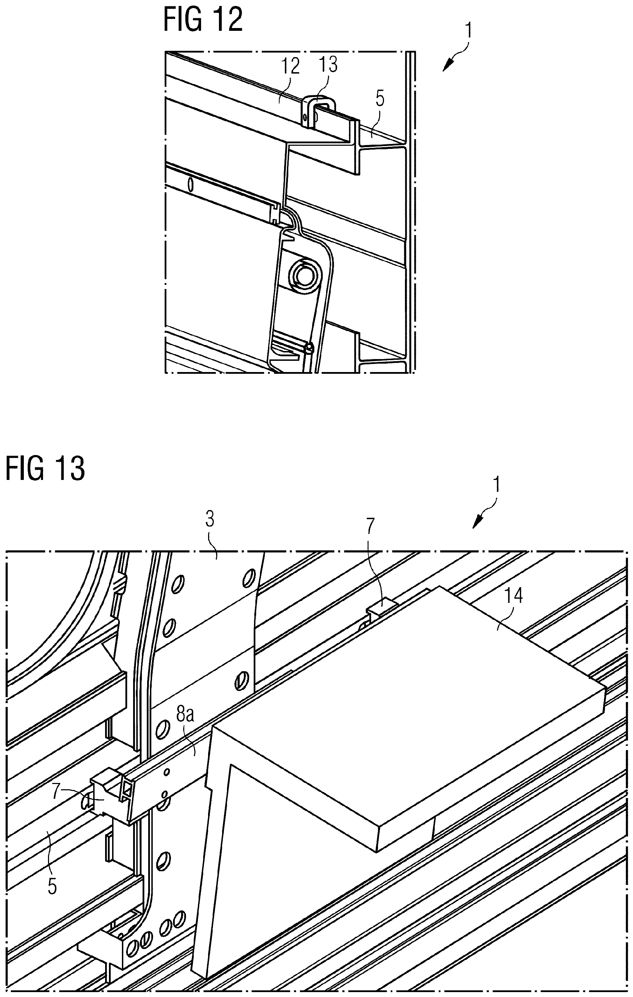

In FIG 12 ist eine schematische Darstellung einer teildifferentialen Gehäusestruktur 1 gezeigt, bei der Innenverkleidungsteile 12 direkt an vorhandenen Stringern 5 befestigt sind. Die Innenverkleidungsteile 12 sind mit Hilfe von Fixierelementen 13 an den Stringern 5 befestigt.

In FIG 13 ist eine schematische Darstellung einer Anbindung eines Tisches 14 an einem Stringer 5 über einen Spant 3 hinweg veranschaulicht. Die Position des Tischs 14 würde einerseits die Befestigung des Tisches 14 sowohl an dem Stringer 5 als auch auf dem Spant 3 erfordern. Dies würde zu zwei unterschiedlichen Befestigungslösungen auf beiden Seiten des anzubindenden Bauteils führen, da der Spant 3 und der Stringer 5 unterschiedlich beschaffen sind und eine unterschiedliche Bauhöhe haben. Die Montage einer Schiene 8a an der Rückseite des Tisches 14, auf welcher die Nutensteine 7 frei verschiebbar sind, ermöglicht es, den Tisch 14 auf beiden Seiten neben dem Spant 3 an dem Stringer 5 zu befestigen. Mit dieser Befestigungsart können auch ungünstige Positionen oder Anordnungen der anzubindenden Komponenten ausgeglichen werden. Eine Anbindung auf unterschiedlichen Ebenen (in Querrichtung) kann so vermieden werden.

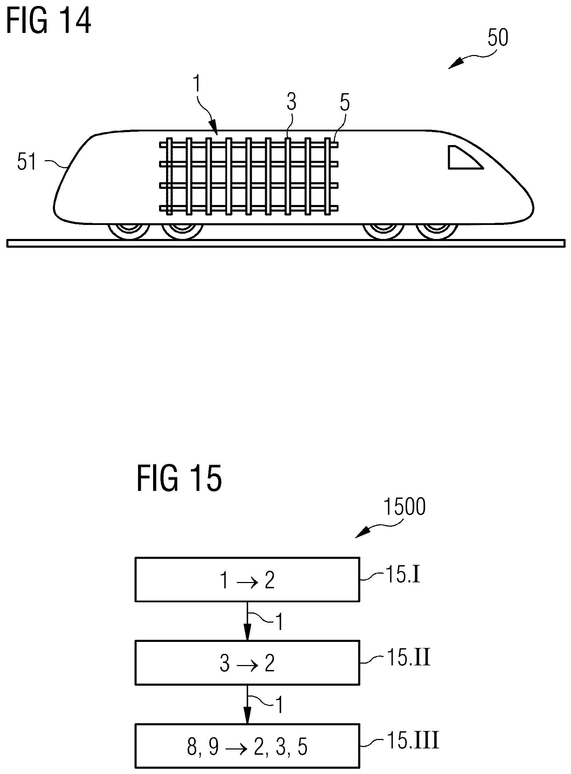

In FIG 14 ist eine schematische Darstellung eines Schienenfahrzeugs 50 gemäß einem Ausführungsbeispiel der Erfindung veranschaulicht. Das Schienenfahrzeug 50 umfasst einen Wagenkasten 51, welcher eine teildifferentiale Gehäusestruktur 1 mit Spanten 3 und Stringern 5 aufweist, an denen Einrichtungskomponenten (nicht gezeigt) fixiert sind.

In FIG 15 ist ein Flussdiagramm 1500 gezeigt, welches ein Verfahren zur Montage einer teildifferenzialen Gehäusestruktur 1 gemäß einem Ausführungsbeispiel der Erfindung veranschaulicht.

Bei dem Schritt 15.I erfolgt ein Ausbilden einer Gehäusestruktur 1 mit horizontal verlaufenden Hohlkammern 2. Die Hohlkammern 1 werden bei der Formung der Gehäusestruktur 1 als integrale Komponenten direkt mitgeformt.

Bei dem Schritt 15.II erfolgt ein Einfügen von vertikal verlaufenden Spanten 3 in die Gehäusestruktur 1, wobei eine Fixierung der Spanten 3 an den Hohlkammern 2, in diesem Ausführungsbeispiel durch einen Punktschweißvorgang, erfolgt und eine weitere Fixierung der Spanten 3 an integralen Komponenten der Gehäusestruktur 1 auf Stoß erfolgt.

Bei dem Schritt 15.III werden durch die Spantenstruktur der Spanten 3 horizontal beschränkte Anbindungsstrukturen bzw. Anbindungskomponenten 8 und Komponenten einer Inneneinrichtung 9 an den Stringern 5 und/oder Hohlkammern 2 und/oder an den Spanten 3 ausgebildet.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Unabhängig vom grammatikalischen Geschlecht eines bestimmten Begriffes sind Personen mit männlicher, weiblicher oder anderer Geschlechteridentität mit umfasst.

## Patentansprüche

1. Differentiale oder teildifferentiale Gehäusestruktur (1), aufweisend:
- eine Außenhaut,
- eine Mehrzahl von horizontal verlaufenden Stringern (5) und/oder Hohlkammern (2) an der Außenhaut,
- eine Mehrzahl von vertikal und/oder quer zu den Stringern (5) und/oder Hohlkammern (2) verlaufenden Spanten (3), welche die Stringer (5) kreuzen und/oder auf die Hohlkammern (2) aufgebracht sind und mit diesen fest verbunden sind,
- eine oder mehrere zusätzliche, durch die Anordnung der Spanten (3) horizontal beschränkte Anbindungsstrukturen (8) an den Stringern (5) und/oder Hohlkammern (2) und/oder an den Spanten (3).

2. Differentiale oder teildifferentiale Gehäusestruktur nach Anspruch 1, wobei die zusätzlichen Anbindungsstrukturen (8) eine der folgenden Komponenten umfassen:
- Aussparungen an den Hohlkammern (2),
- Vorsprünge an den Hohlkammern (2),
- Aussparungen an den Spanten (3) für das Einsetzen von Nutensteinen (7).

3. Differentiale oder teildifferentiale Gehäusestruktur nach Anspruch 1 oder 2, wobei die Anbindungsstrukturen (8) ein Langloch (6) aufweisen, das in einen Stringer (5) und/oder eine Hohlkammer (2) auf seiner dem Innenraum zugewandten Seite derart ausgebildet ist, dass durch das Langloch (6) ein Nutenstein (7) hindurchführbar ist.

4. Differentiale oder teildifferentiale Gehäusestruktur nach einem der Ansprüche 1 bis 3, wobei die Anbindungsstrukturen (8) eine L-förmige Aussteifung an einem Stringer (5) und/oder an einer Hohlkammer (2) aufweisen, welche zum Abstützen eines Moments einer Halterung einer anzubindenden Komponente, ausgebildet ist.

5. Differentiale oder teildifferentiale Gehäusestruktur nach einem der vorstehenden Ansprüche, wobei die Anbindungsstrukturen (8) horizontal verlaufende C-Schienen umfassen, die im Bereich der Spanten (3) unterbrochen sind.

6. Differentiale oder teildifferentiale Gehäusestruktur nach einem der vorstehenden Ansprüche, wobei die Anbindungsstrukturen (8) an die Hohlkammer (2) und/oder Stringer (5) und/oder Spanten (3) zusätzlich fixierte Anbindungskomponenten (8) umfassen.

7. Differentiale oder teildifferentiale Gehäusestruktur nach Anspruch 6, wobei die zusätzlich fixierten Anbindungskomponenten (8) durch Nieten an den Hohlkammern (2) und/oder Stringern (5) und/oder Spanten (3) fixiert sind.

8. Differentiale oder teildifferentiale Gehäusestruktur nach einem der vorstehenden Ansprüche, wobei die Anbindungsstrukturen (8) Aussparungen umfassen, die direkt in zwei benachbarten Spanten (3) ausgebildet sind, derart, dass eine Halterung zwischen zwei Spanten (3) angeordnet werden kann.

9. Differentiale oder teildifferentiale Gehäusestruktur nach Anspruch 8, wobei zumindest eine der Aussparungen eine Schlüssellochfräsung (3a) umfasst.

10. Differentiale oder teildifferentiale Gehäusestruktur nach Anspruch 8 oder 9, wobei die Aussparungen dazu ausgebildet sind, eine Gewindeplatte aufzunehmen, in welche durch die jeweilige Aussparung eine Schraube drehbar ist.

11. Differentiale oder teildifferentiale Gehäusestruktur nach einem der vorstehenden Ansprüche, wobei die Anbindungsstrukturen eine C-Schiene (11a, 11b, 11c) umfassen, welche auf mindestens zwei einander benachbarten Spanten (3) fixiert ist.

12. Differentiale oder teildifferentiale Gehäusestruktur nach einem der vorstehenden Ansprüche, wobei die Anbindungsstrukturen (8) dazu ausgebildet sind, Innenverkleidungskomponenten (12) mit den Stringern (5) oder Hohlkammern (2) zu fixieren, derart, dass die Innenverkleidungskomponenten (12) eine Stabilisierungsfunktion für die Gehäusestruktur (1) übernehmen.

13. Wagenkasten (51), aufweisend eine differentiale oder teildifferentiale Gehäusestruktur (1) nach einem der vorstehenden Ansprüche.

14. Schienenfahrzeug (50), aufweisend einen Wagenkasten (51) nach Anspruch 13.

15. Verfahren zur Montage einer differentialen oder teildifferentialen Gehäusestruktur (1) nach einem der vorstehenden Ansprüche 1 bis 12, aufweisend die Schritte:
- Ausbilden einer Gehäusestruktur (1) mit einer Außenhaut und mit einer Mehrzahl von horizontal verlaufenden Stringern (5) und/oder Hohlkammern (2),
- Ausbilden einer Mehrzahl von vertikal und/oder quer zu den Stringern (5) und/oder Hohlkammern (2) verlaufenden Spanten (3), welche die Stringer (5) kreuzen und/oder auf die Hohlkammern (2) aufgebracht sind und mit diesen fest verbunden werden,
- Ausbilden einer oder mehrerer zusätzlicher, durch die Spantenstruktur (5) horizontal beschränkter Anbindungsstrukturen an den Stringern (5) und/oder Hohlkammern (2) und/oder an den Spanten (3).
